# EUROPEAN PATENT APPLICATION

(11) **EP 1 203 527 A2**
(43) Date of publication of application: **08.05.2002**
(21) Application number: 01309158.2
(22) Date of filing: 29.10.2001
(51) Int. Cl.: A01K 1/06

(54) **Holding device**

(30) Priority: 02.11.2000 GB 0026797
(71) Applicant: Dale, John, Mottram St Andrew, Macclesfield SK10 4QJ (GB)
(72) Inventor: The designation of the inventor has not yet been filed
(74) Representative: Quest, Barry

(57) **Abstract**

A holding device for a lead rope (25) of a horse has a horizontal channel for the rope defined between upper and lower pairs of projecting fingers (5, 6). A latch element (9) is pivoted between the lower fingers (6) so that it can move up to a vertical position at which it closes the front of the channel. A lever (15) is pivoted behind a lower part of the latch element (9). The rope (25) has a knot (26) at one end. When the lever (15) is vertical this holds the latch element (9) vertical so that the rope (25) cannot be pulled out of the channel. When the lever (15) is pivoted to one side, the latch element (9) can swing down to open the channel and allow release of the rope (25).

## Description

This invention relates to a holding device for releasably holding an elongate flexible member such as a rope or cord.

It is usual practice to secure a horse with a halter or lead rope by tying the rope with a releasable slip knot to a hitching point.

It can however be difficult to ensure that the rope is held satisfactorily. If the knot is not made securely it may become undone, or may be loosened by activity of the horse. On the other hand if the knot is made too securely it may tighten under tension so that it cannot be quickly released should this be necessary for example if the horse becomes tangled or caught on the rope or hitching point.

An object of the present invention is to provide a holding device which can securely hold an elongate flexible member in a convenient manner yet which allows the member to be readily released, when required, even when the member is under tension.

According to the present invention therefore there is provided a holding device for holding an elongate flexible member comprising a transverse open-fronted passageway, a latch member movable about a transverse pivot axis upwards towards a closed position at which it extends across the open front of the passageway, and a locking member pivotable between a locking position, at which it engages the latch member beneath the said pivot axis to hold the latch member in the closed position, and a release position at which the latch member is free to move downwards away from the open front of the passageway.

With this arrangement, with the locking member in the release position, the latch member can drop downwards and outwards so that the flexible member can be inserted sideways into the passageway through the open front. The latch member can then be pushed upwards and inwards into the closed position, and the locking member can be pivoted into the locking position, whereby the front of the passageway is closed. The flexible member is thereby retained against displacement out of the open front of the passageway, and it can be retained against displacement longitudinally by engagement of an enlargement on the flexible member, such as a tied knot in the case of a rope, with a mouth of the passageway at one end thereof.

Thus, the flexible member can be easily and conveniently engaged with the holding device so as to be securely held thereby and, when required the flexible member can be quickly and easily released from the device. In so far as tensioning of the flexible member tends to act principally longitudinally of the passageway and/or against upper or lower parts of the passageway, rather than in a direction such as to jam the latch member against the locking member, the latch member can be readily released even when the flexible member is under tension.

The passageway is preferably defined by upper and lower forwardly projecting members. Conveniently there may be a lower pair of such members between which the latch member is pivoted, and there may be either a single upper member which may be to one side of the latch member, or there may be an upper pair of members one on each side of the latch member. The latter arrangement can facilitate both left hand and right hand usage.

Most preferably, movement downwards of the latch member when released occurs under the action of the weight of the latch member. Thus, preferably the pivot axis is displaced rearwardly towards the passageway away from a centreline of the latch member so as to generate a moment whereby the latch member moves downwards on release. Also, the latch member is preferably pivoted close to a lower end thereof such that a main part, or mass, of the latch member is above the pivot axis. Also a lower part of the latch member, below the pivot axis, preferably has an attached member or flange which projects forwardly to facilitate downwards pivoting.

Cooperable configurations may be provided on the latch member and adjacent thereto e.g. on the passageway to act as a stop limiting the downward movement of the latch member when released, preferably so that the latch member projects forwardly in its lowermost position thereby to facilitate manual movement of the latch member back upwards to its closed position.

Conveniently the cooperable configurations may comprise the aforesaid attached member or flange and the aforesaid lower pair of passageway members.

The locking member may comprise a lever pivotable from side to side and having an upper end portion or head which engages behind the latch member below its pivot axis in the locking position, and which is displaced to a side of the latch member in the release position. The locking member may be held in its displaced release position by the latching member and it may return to its locking position under the action of its own weight when the latch member is pushed upwards into its closed position. Thus, the lever pivot is preferably close to its upper end so that a main part, or mass, of the lever is below its pivot.

Conveniently the lever may be aligned or extend in the same direction as the latch member in the locking position.

The holding device may have a back plate with fixing holes or the like by means of which it can be fixed to an upright support surface.

Also, the holding device may have a protective shield or guard which extends partially over the locking member so that the locking member cannot be readily inadvertently or undesirably released. This latter arrangement is particularly advantageous when the device is used for holding the lead rope of a horse in so far as it can prevent the horse from contacting and releasing the locking member.

It is visualised that the holding device will find particular application in the context of retention of a lead rope of a horse in which case a stop knot will be tied at a desired position in the rope.

It is however to be understood that the invention is not intended to be restricted to this field of activity and the holding device may be used for any suitable purpose in any suitable context.

The device is preferably constructed from rigid metal parts, particularly steel, although other materials can also be used.

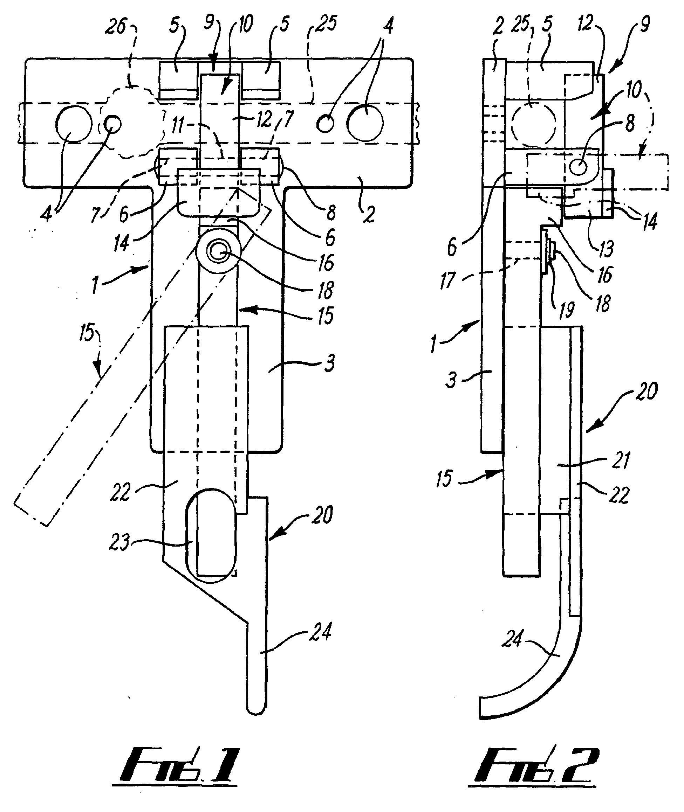

The invention will now be described further by way of example only and with reference to the accompanying drawings in which:-
Figures 1 and 2 are respectively plan and side views of one form of a holding device according to the invention.

The drawings show a holding device which is particularly suited for releasably holding a halter or lead rope of a horse.

The device has a one piece rigid steel T-shaped back plate 1 having a rectangular top horizontal part 2 and a rectangular central lower vertical part 3.

The top part 2 has fixing holes 4 at its two end regions by means of which the plate 1 can be attached to a vertical support surface such as a building wall.

Towards the top edge of the top part 2, centrally thereof, there are two spaced apart rigid steel fingers 5 of square cross-section which are welded to the plate 1 so as to extend horizontally forwards therefrom.

Two similar fingers 6 are welded to the plate 1 at positions vertically below the fingers 5 adjacent the lower edge of the top part so as also to extend horizontally forwards.

The end regions of these lower fingers 6 have aligned horizontal through bores 7 and a pivot pin 8 is passed through and held within these bores 7.

A latch member 9 is mounted between the fingers 6, 7. This comprises a square-section steel finger 10 which has a through bore 11 near to a lower end. The finger 10 fits between the fingers 6 and the pin 8 passes through the bore 11 in the finger 10.

The finger 10 has an upper part 12, above the bore 11, and a lower part 13, below the bore 11. This upper part 12 is longer than the lower part 13. On an outer face of the lower part 13 there is welded a flat, substantially rectangular steel flange 14 which projects forwardly from the outer face of the lower part 13 (Figure 2) and which has parts extending beyond both sides of the finger 10.

Beneath the lower fingers 6 a lever 15 is pivotally mounted on the lower part 3 of the plate 1.

This lever 15 comprises a straight square-section steel bar, like the fingers 5, 6, 10, with an enlarged head 16 at its top end. Immediately below the head 16 there is a through bore 17 and the lever is pivoted to the plate part 3 by means of a pin 18 fixed at right angles to the plate part and passing through the bore 17. The lever 15 is retained on the pin 18 by means of a washer and clip 19 at the free end of the pin 18.

The lever 15 is of greater length than the plate part 3 so that, in a vertical position of the lever 15 its bottom end portion extends below the bottom end of the plate part 3.

A steel guard 20 is fixed to the plate part 3 so that it is forwardly displaced relative to such part 3 and extends over the lower portion of the lever 15 when in its vertical position.

The guard 20 comprises an upstanding rectangular plate 21 to the right side of the lever 15 (as shown) at right angles to the plate 1, and a front plate 22 extending at the left side of this plate 21 parallel to the plate 1. The front plate 22 has a viewing aperture 23 towards its lower end. Also a finger 24 is attached to the right side of the lower end region of the front plate 22 curving downwardly and rearwardly.

The fingers 5, 6 define therebetween an open-fronted transverse passageway extending horizontally parallel to the top part 2 of the plate 1.

As shown in the drawings, the open front of the passageway is closed by virtue of the fact that the finger 10 of the latch member 9 extends vertically and bridges the upper and lower pairs of fingers 5, 6.

The lever 15 also extends vertically aligned in plan view with the finger 10 and the head 16 fits snugly between the back side of the lower part 13 of the finger 10 and the plate 1. The latch member 9 is thereby held locked in its vertical closed position.

The latch member 9 can be released when required by pivoting the lever 15 to the left beyond the position indicated in broken lines. This displaces the head 16 away from the latch member 9 whereby the latch member 9 drops forwards and downwards to a position at which the finger 10 extends forwardly at right angles to the plate 1. This occurs as a consequence of the rearward displacement of the pivot axis 11 relative to the centreline of the finger 10 which gives rise to a clockwise moment as seen in Fig 2. Forwards movement of the finger is facilitated by the weight of the flange and the upper part of the finger 10 above the axis 11. In this forward position the side parts of the flange 14 abut the fingers 6 as indicated in broken lines. Also the lower part 13 of the finger 10 and the flange 14 abut the side of the head 16 of the lever 15 to hold it in its displaced position.

With the latch member 9 in this open position a rope 25 can be laid sideways into the passageway between the fingers, as shown in broken lines. A stop knot 26 is tied in the rope at a desired position as shown.

To retain the rope 25 in position it is now only necessary to push the finger 10 of the latch member 9 upwards. This frees the head 16 of the lever and the lever 15 swings back to its vertical locking position under the action of the weight of the main part of the lever 15 below its pivot.

The rope 25 cannot be displaced forwardly out of the passageway because this is closed by the finger 10. The rope 25 cannot be pulled longitudinally out of the passageway because the stop knot 26 engages the fingers 5, 6.

The latch member 9 is held locked by the lever 15 and the guard 20 acts to prevent inadvertent or undesired displacement of the lever 15 e.g. due to the horse rubbing against the holding device.

When required the rope can be released quickly and easily simply by pulling the lever 15 to the left so that the latch member 9 drops open. This can be done easily and without requiring great strength, even if the rope is in tension due to the horse pulling on the rope. This is because the tension will tend to act principally on the fingers 5, 6 rather than the finger 10 whereby little of the tension is translated into a jamming force between the latch member 9 and the lever 15. In so far as the rope 25 also pulls forwardly against the finger 10 this will tend to be close to the pivot pin 8 whereby there will again tend to be little translation to pivoting of the member 9 and jamming on the head 16.

Quick release can therefore be achieved even by a child.

The device described therefore provides a simple means of conveniently achieving quick and easy retention as well as quick and easy release.

Importantly this can be achieved without requiring clips or metal attachments on the rope which could give rise to a safety risk.

It is of course to be understood that the invention is not intended to be restricted to the details of the above embodiment which are described by way of example only.

Thus for example the finger (24) curving downwardly and rearwardly from the front plate (22) may be omitted and instead the front plate (22) may be extended in length and curved downwardly and rearwardly.

## Claims

1. A device for holding an elongate flexible member comprising:
a transverse, open fronted passageway;
a latch member 9 movable about a transverse pivot axis 11 upwards towards a closed position at which it extends across the open front of the passageway;
a locking member 15 pivotable between a locking position at which it engages the latch member 9 beneath the pivot axis 11 of the latch member 9 thereby holding said latch member 9 in the closed position, and a release position at which the latch member 9 is free to move downwards away from the open front of the passageway.

2. A device according to claim 1 where the open fronted passageway is defined by upper 5 and lower 6 forwardly projecting members.

3. A device according to claim 2 wherein the members comprise a pair of said lower forwardly projecting members 6 and the latch member 9 is pivoted therebetween.

4. A device according to claim 2 or 3 wherein there is a pair of upper forwardly projecting members 5, positioned one on each side of the latch member 9.

5. A device according to any one of the preceding claims wherein the pivot axis 11 is displaced rearwardly towards the passageway away from a centreline of the latch member 9 so as to generate a moment whereby the latch member 9 moves downward on release.

6. A device according to claim 5 wherein co-operable configurations are provided on the latch member 9 and adjacent thereto to act as a stop limiting downward movement of the latch member 9 when released beyond a lowermost position.

7. A device according to claim 6 when dependant on claim 3 wherein the cooperable configurations comprise a flange 14 attached to a lower part 13 of the latch member 9 and the lower forwardly projecting members 6.

8. A device according to any one of the preceding claims wherein an upper portion 16 of said locking member 15 engages behind the latch member 9 in the locking position and is displaced to one side in the release position.

9. A device according to claim 8 wherein the locking member 15 is held in the release position by the latch member 9 when the latch member is pivoted downwards.

10. A device according to any of the preceding claims wherein the pivot axis 17 of the locking member 15 is adjacent to an upper end 16 of the locking member 15 so that the locking member 15 will return to the locking position by action of its own weight on release.

11. A device according to any one of the preceding claims additionally incorporating a back plate 1 which has fixing holes 4 for fixing the device to an upright support surface.

12. A device according to any one of the preceding claims additionally incorporating a protective shield or guard 20 extending partially over the locking member 15.
